# EUROPEAN PATENT APPLICATION

(11) **EP 4 620 629 A1**
(43) Date of publication of application: **24.09.2025**
(21) Application number: 25163393.9
(22) Date of filing: 13.03.2025
(51) Int. Cl.: B25J 9/10, B25J 17/00, B25J 19/00, F16J 15/00

(54) **ROBOT**

(30) Priority: 18.03.2024 JP 2024042881
(71) Applicant: KAWASAKI JUKOGYO KABUSHIKI KAISHA, Kobe-shi, Hyogo 650-8670 (JP)
(72) Inventor: HASHIMOTO, Naoki, Kobe-shi, Hyogo 650-8670 (JP); HARADA, Soki, Kobe-shi, Hyogo 650-8670 (JP); ARAKI, Takashi, Kobe-shi, Hyogo 650-8670 (JP); WAKITA, Daisuke, Kobe-shi, Hyogo 650-8670 (JP); HANEDA, Akihiro, Kobe-shi, Hyogo 650-8670 (JP); ARIGA, Tomomichi, Kobe-shi, Hyogo 650-8670 (JP)
(74) Representative: Müller-Boré & Partner Patentanwälte PartG mbB

(57) **Abstract**

A robot (100) according to this disclosure includes an annular lubricant reservoir (80) arranged between a first seal (71) and a second seal (74) in a rotation axis (CL) direction of a rotator (42) to reserve a lubricant so as to delay arrival of the lubricant that leaks from a rotation transmission mechanism (40) at the second seal (74).

## Description

### BACKGROUND OF THE INVENTION

### Field of the Invention

The present disclosure relates to a robot. Description of the Background Art

Robots including rotation transmission mechanisms arranged in joints of the robot arms are known in the art. For example, Japanese Patent Laid-Open Publication No. JP 2001-254787 discloses a robot including a rotation transmission mechanism including an annular first seal arranged in a joint of a robot arm and sealing a lubricant inside, and an annular second seal arranged outside of the rotation transmission mechanism and outside of the first seal in a radial direction of a rotator of the rotation transmission mechanism. In the robot disclosed in Japanese Patent Laid-Open Publication No. JP 2001-254787, in a case in which a direction of a rotation axis of the rotator is a horizontal direction, the lubricant that has passed through the first seal will easily immediately reach the second seal through a space that has one end and another end adjacent to the first seal and the second seal, respectively.

However, in the robot disclosed in Japanese Patent Laid-Open Publication No. JP 2001-254787, since the lubricant that has passed through the first seal will easily immediately reach the second seal through the space that has one end and another end adjacent to the first seal and the second seal, respectively, the lubricant that has leaked from the rotation transmission mechanism is likely to leak further outward from the second seal. For this reason, a robot capable of preventing the lubricant that has leaked from the rotation transmission mechanism from further leaking outward is desired.

### SUMMARY OF THE INVENTION

The present disclosure is intended to solve the above problem, and one object of the present disclosure is to provide a robot capable of preventing a lubricant that has leaked from a rotation transmission mechanism from further leaking outward.

In order to attain the aforementioned object, a robot according to one aspect of the present disclosure includes a robot arm including a plurality of arm parts and a joint part connecting the arm parts to each other; a rotation transmission mechanism arranged in the joint and including a fixer, a rotator rotating about a rotation axis relative to the fixer, and an annular first seal arranged between the fixer and the rotator to seal a lubricant inside the rotation transmission mechanism; an annular second seal arranged outside of the rotation transmission mechanism and on one side of the first seal in the rotation axis direction of the rotator; and an annular lubricant reservoir arranged between the first seal and the second seal in the rotation axis direction of the rotator to reserve the lubricant so as to delay arrival of the lubricant that leaks from the rotation transmission mechanism at the second seal.

In the robot according to the one aspect of the present disclosure, as discussed above, an annular lubricant reservoir is provided which is arranged between the first seal and the second seal in the rotation axis direction of the rotator to reserve the lubricant so as to delay arrival of the lubricant that leaks from the rotation transmission mechanism the second seal. Accordingly, the lubricant reservoir can delay the arrival of the lubricant that leaks from the rotation transmission mechanism at the second seal by reserving the lubricant. Consequently, it is possible to prevent the lubricant that has leaked from the rotation transmission mechanism from further leaking outward.

According to the present disclosure, as described above, it is possible to provide a robot capable of preventing a lubricant that has leaked from a rotation transmission mechanism from further leaking outward.

### BRIEF DESCRIPTION OF THE DRAWINGS

FIG. 1 is a perspective view showing a robot according to one embodiment of the present disclosure.
FIG. 2 is a cross-sectional view showing a joint part of the robot according to the one embodiment of the present disclosure.
FIG. 3 is an enlarged view of a part III in FIG. 2.

### DESCRIPTION OF THE PREFERRED EMBODIMENT

Embodiments embodying the present disclosure will be described with reference to the drawings.

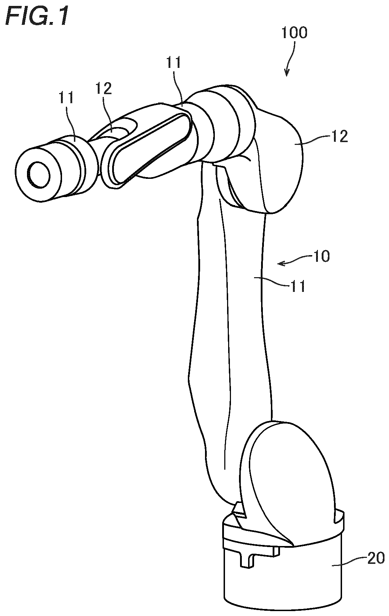

The following description describes a configuration of a robot 100 according to one embodiment of the present disclosure with reference to FIGS. 1 to 3.

### (Entire Configuration of Robot)

As shown in FIG. 1, the robot 100 is a vertical multi-joint robot. The robot 100 includes a robot arm 10 and a base 20 supporting the robot arm 10. The robot arm 10 includes a plurality of arm parts 11 and joint parts 12 connecting the arm parts 11 to each other. An end effector is attached to a distal end of the robot arm 10.

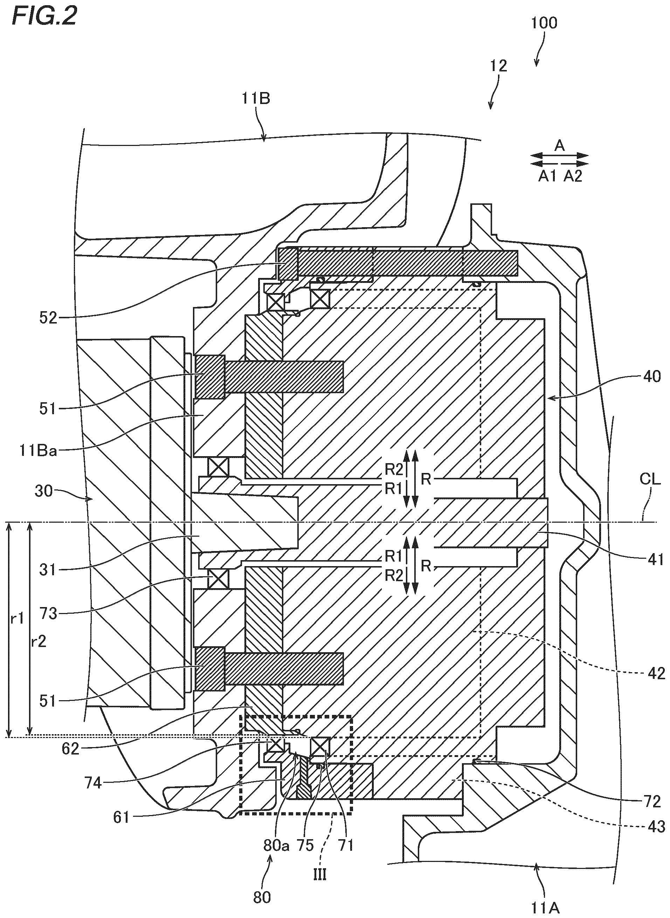

As shown in FIG. 2, the robot 100 includes an electric motor 30 and a rotation transmission mechanism 40 connected to an output shaft 31 of the electric motor 30. The rotation transmission mechanism 40 is arranged in the joint part 12. Here, reference signs A, A1, A2, R, R1, and R2 in FIG. 2 indicate a direction of a rotation axis CL of a rotator 42, one side in the rotation axis CL direction, another side in the rotation axis CL direction, a radial direction of the rotator 42, an inner side in the radial direction of the rotator 42, and an outer side in the radial direction of the rotator 42, respectively. Here, in FIG. 2, the robot arm 10 is orientated so that the rotation axis CL of the rotator 42 is a horizontal direction.

### (Configuration of Electric Motor and Rotation Transmission Mechanism)

As shown in FIG. 2, the electric motor 30 and the rotation transmission mechanism 40 are provided to rotate, relative to the first arm part 11A arranged on a proximal end side of the robot arm 10 in two arm parts 11 adjacent to each other through the joint part 12, the second arm part 11B arranged on the distal end side of the robot arm 10 in the arm parts 11 adjacent to each other through the joint part 12. Specifically, the rotation transmission mechanism 40 includes a shaft 41, a gearing part (not shown), the rotator 42, and a fixer 43. An end of the shaft 41 on the one side in the rotation axis CL direction of the rotator 42 is fixed to the output shaft 31 of the electric motor 30. An end of the shaft 41 on the another side in the rotation axis CL direction of the rotator 42 is connected to the gearing part. The gearing part is connected to the rotator 42. A rotational drive force of the electric motor 30 is transmitted to the rotator 42 through the output shaft 31 of the electric motor 30, the shaft 41, and the gearing part. The rotator 42 rotates relative to the fixer 43. The rotator 42 is fixed to the second arm part 11B and a rotation part 62, which will be described later, by fasteners 51. The fixer 43 is fixed to the first arm part 11A and the housing 61, which will be described later, by a fastener 52. The rotation transmission mechanism 40 is a speed reducer.

The rotation transmission mechanism 40 is arranged on the another side in the rotation axis CL direction of the rotator 42 with respect to the electric motor 30. The shaft 41 is arranged coaxially with the output shaft 31 of the electric motor 30. The rotator 42 is arranged on the outer side in the radial direction of the rotator 42 with respect to the shaft 41. The fixer 43 is arranged on the outer side in the radial direction of the rotator 42 with respect to the rotator 42. An end 11Ba of the second arm part 11B on the first arm part 11A side is arranged between the rotation transmission mechanism 40 and the electric motor 30.

The robot 100 includes the annular rotation part 62 arranged between the end 11Ba of the second arm part 11B on the first arm part 11A side and the rotator 42 of the rotation transmission mechanism 40 in the rotation axis CL direction of the rotator 42 with an inner peripheral surface of the rotation part facing an outer peripheral surface of the shaft 41. The rotation part 62 is fixed to the second arm part 11B and the rotator 42 of the rotation transmission mechanism 40 as described above. Accordingly, the rotation part 62 rotates together with the second arm part 11B relative to the first arm part 11A.

### (Structure for Sealing Lubricant)

As shown in FIG. 2, an interior of the rotation transmission mechanism 40 is filled with a lubricant to lubricate engagement of the gear in the gearing part. The robot 100 includes an annular first seal 71, an annular O-ring 72 for the first arm part, and a seal 73 for the rotation part as a structure for sealing the lubricant.

The first seal 71 is arranged between the fixer 43 and the rotator 42. The first seal 71 prevents the lubricant inside the rotation transmission mechanism 40 from leaking out of the rotation transmission mechanism 40 between the fixer 43 and the rotator 42. The first seal 71 includes a lip formed on the first seal 71 on the interior side in the radial direction the rotator 42.

The O-ring 72 for the first arm part is arranged between the end of the first arm part 11A of the second arm part 11B side and the fixer 43 of the rotation transmission mechanism 40. The O-ring 72 for the first arm part prevents the lubricant inside the rotation transmission mechanism 40 from leaking out of the joint part 12 between the end of the first arm part 11A on the second arm part 11B side and the fixer 43 of the rotation transmission mechanism 40.

The seal 73 for the rotation part is arranged between the outer peripheral surface of the shaft 41 on the one side in the rotation axis CL direction of the rotator 42 and the inner peripheral surface of an opening formed in an end 11Ba of the second arm part 11B on the first arm part 11A side. The seal 73 for the rotation part prevents the lubricant inside the rotation transmission mechanism 40 from leaking between the outer peripheral surface of the shaft 41 on the one side in the rotation axis CL direction of the rotator 42 and the inner peripheral surface of the opening formed in the end 11Ba of the second arm part 11B on the first arm part 11A side to a space of the joint part 12 in which the electric motor 30 is arranged. The seal 73 for the rotation part includes a lip arranged on the seal 73 for the rotation part on the interior side in the radial direction of the rotator 42.

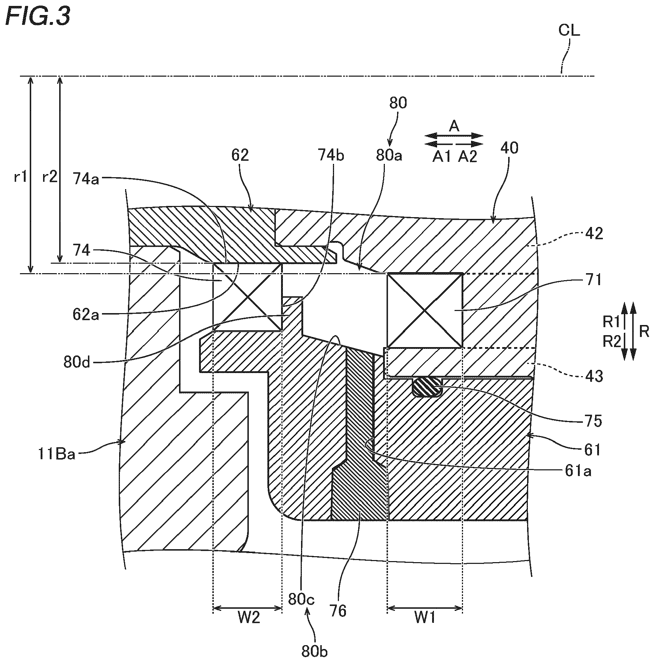

As shown in FIG. 3, the robot 100 includes the annular housing 61, the annular rotation part 62 described above, the annular second seal 74, and the annular O-ring 75 for the housing as a structure for preventing further outward leakage of the lubricant that has leaked from the rotation transmission mechanism 40 through the part of the space between the fixer 43 and the rotator 42 in which the first seal 71 , in other words, as a structure for sealing against leakage of the lubricant to the outside of the joint part 12. The housing 61, the rotation part 62, the second seal 74, and the O-ring 75 for the housing are arranged outside of the rotation transmission mechanism 40. The housing 61 is arranged outside of the rotation transmission mechanism 40 to configure the lubricant reservoir 80, which will be described later. Here, the first seal 71 includes the lip formed on the first seal 71 on the interior side in the radial direction the rotator 42.

A part of the housing 61 on the another side in the rotation axis CL direction of the rotator 42 is arranged outside of the rotator 42 in the radial direction with respect to the fixer 43 of the rotation transmission mechanism 40. A part of the housing 61 on the one side in the rotation axis CL direction of the rotator 42 faces an end of the rotator 42 of the rotation transmission mechanism 40 on the one side in the rotation axis CL direction of the rotator 42 and the rotation part 62 in the radial direction of the rotator 42. The second seal 74 is arranged on the first seal 71 on the one side in the rotation axis CL direction of the rotator 42. The second seal 74 includes a lip formed on the second seal 74 on the interior side in the radial direction of the rotator 42. The second seal 74 is arranged between the end of the housing 61 on the one side in the rotation axis CL direction of the rotator 42 and the rotation part 62 in the radial direction of the rotator 42. The rotation part 62 has an outer peripheral surface 62a that is in contact with an inner peripheral surface 74a of the second seal 74. The end of the housing 61 on the one side in the rotation axis CL direction of the rotator 42 has an inner peripheral surface that is in contact with an outer peripheral surface of the second seal 74.

The end of the fixer 43 of the rotation transmission mechanism 40 on the one side in the rotation axis CL direction of the rotator 42, the end of the housing 61 on the one side in the rotation axis CL direction of the rotator 42, the second seal 74, the rotation part 62, and the end of the rotator 42 of the rotation transmission mechanism 40 on the one side in the rotation axis CL direction of the rotator 42 configure the lubricant reservoir 80 as an annular space that reserves the lubricant that has leaked from the rotation transmission mechanism 40 through a part of the space between the fixer 43 and the rotator 42 in which the first seal 71 is arranged. In other words, the robot 100 includes the annular lubricant reservoir 80 arranged between the first seal 71 and the second seal 74 in the rotation axis CL direction of the rotator 42 to reserve the lubricant that has leaked from the rotation transmission mechanism 40 through the part of the space between the fixer 43 and the rotator 42 in which the first seal 71 is arranged.

The O-ring 75 for the housing is arranged between the end of the rotator 42 of the rotation transmission mechanism 40 on the one side in the rotation axis CL direction of the rotator 42 and the part of the housing 61 on the another side in the rotation axis CL direction of the rotator 42. The O-ring 75 for the housing prevents the lubricant that is reserved in the lubricant reservoir 80 from leaking to the outside of the joint part 12 between the end of the rotator 42 of the rotation transmission mechanism 40 on the one side in the rotation axis CL direction of the rotator 42 and the part of the housing 61 on the another side in the rotation axis CL direction of the rotator 42.

### (Configuration of Lubricant Reservoir)

As shown in FIG. 3, the second seal 74 includes the lip formed on the second seal 74 on the interior side in the radial direction of the rotator 42. The lubricant reservoir 80 has lubricant discharge holes 61a, which are connected to the lubricant reservoir 80, and are normally closed and opened when the lubricant reserved in the lubricant reservoir 80 is discharged from the lubricant reservoir 80. The lubricant discharge holes 61a are normally closed by sealing plugs 76, and the sealing plugs 76 are removed from the lubricant discharge holes 61a when the lubricant reserved in the lubricant reservoir 80 is discharged from the lubricant reservoir 80. The lubricant discharge holes 61a are formed in the housing 61.

The lubricant discharge holes 61a are arranged at positions that will be positioned on a bottom end 80a of the annular lubricant reservoir 80 if the rotation axis CL direction of the rotator 42 is a horizontal direction. Specifically, each of the lubricant discharge holes 61a is formed in a part of a surface 80b of the lubricant reservoir 80 on the outer side in the radial direction of the rotator 42 that will serve as a bottom surface of the lubricant reservoir 80 if the rotation axis CL direction of the rotator 42 is a horizontal direction. Here, the plurality of lubricant discharge holes 61a are arranged at constant intervals away from each other in the radial direction of the rotator 42. In other words, the lubricant discharge holes 61a are formed in parts other than the part of the surface 80b of the lubricant reservoir 80 on the outer side in the radial direction of the rotator 42 that serves as the bottom surface of the lubricant reservoir 80 if the rotation axis CL direction of the rotator 42 is a horizontal direction.

### <Structure for Delaying Arrival of Lubricant Leaking from Rotation Transmission Mechanism at Second Seal>

The lubricant reservoir 80 reserves the lubricant to delay the arrival of the lubricant that leaks from the rotation transmission mechanism 40 at the second seal 74.

The lubricant reservoir 80 includes an annular partition wall 80d protruding to cover a part 74b of the second seal 74 on the first seal 71 side as a first structure for delaying arrival of the lubricant leaking from rotation transmission mechanism 40 at the second seal 74. Specifically, the annular partition wall 80d is formed on the surface 80b of the lubricant reservoir 80 on the outer side in the radial direction of the rotator 42 to protrude from the outer side toward the inner side in the radial direction of the rotator 42 so as to cover a part of the second seal 74 in the rotation axis CL direction of the rotator 42**.** The partition wall 80d protrudes from the surface 80b of the lubricant reservoir 80 on the outer side in the radial direction of the rotator 42 from the outer side toward the inner side in the radial direction of the rotator 42 so as to cover a half the inner-side part of the second seal 74 in the radial direction of the rotator 42.

Also, as a second structure for delaying arrival of the lubricant leaking from rotation transmission mechanism 40 at the second seal 74, a surface 80c of the lubricant reservoir 80 that will serve as the bottom surface of the lubricant reservoir 80 if the rotation axis CL direction of the rotator 42 is a horizontal direction is inclined from a side on the surface 80c, which will serve as the bottom surface of the lubricant reservoir 80, to be closer to a side opposite to the surface 80c, which will serve as the bottom surface of the lubricant reservoir 80 as being closer from the first seal 71 side toward the second seal 74 side in the rotation axis CL direction of the rotator 42. Specifically, the surface 80b of the lubricant reservoir 80 on the outer side in the radial direction of the rotator 42 is inclined from the outer side toward the inner side in the radial direction of the rotator 42, as being closer from the first seal 71 side toward the second seal 74 side in the rotation axis CL direction of the rotator 42. The surface 80b of the lubricant reservoir 80 on the outer side in the radial direction of the rotator 42 will be inclined from a lower side toward an upper side in a vertical direction as being closer from the first seal 71 side toward the second seal 74 side if the rotation axis CL direction of the rotator 42 is a horizontal direction. Here, the lubricant discharge hole 61a is formed at a position closer to the first seal 71 with respect to the second seal 74 on the surface 80c of the lubricant reservoir 80, which will serve as the bottom surface of the lubricant reservoir 80 if the rotation axis CL direction of the rotator 42 is the horizontal direction.

### (Size of Second Seal Relative to First Seal)

A width W2 of the second seal 74 is smaller than a width W1 of the first seal 71 in the rotation axis CL direction of the rotator 42. In other words, an area of the inner peripheral surface 74a of the second seal 74 that is in contact with the outer peripheral surface 62a of the rotation part 62 is smaller than an area of the inner peripheral surface of the first seal 71 that is in contact with the rotator 42 of the rotation transmission mechanism 40.

An inner diameter r2 of the second seal 74 is smaller than an inner diameter r1 of the first seal 71. In other words, a position of the inner peripheral surface 74a of the second seal 74 that is in contact with the outer peripheral surface 62a of the rotation part 62 is on the inner side with respect to a position of the inner peripheral surface of the first seal 71 that is in contact with the rotator 42 of the rotation transmission mechanism 40 in the radial direction of the rotator 42. Here, a position of the outer peripheral surface of the second seal 74 is on the outer side with respect to a position of the inner peripheral surface of the first seal 71 in the radial direction of the rotator 42.

### (Advantages of the Embodiment)

In this embodiment, the following advantages are obtained.

In this embodiment, the robot 100 includes the annular lubricant reservoir 80 arranged between the first seal 71 and the second seal 74 in the rotation axis CL direction of the rotator 42 to reserve the lubricant so as to delay arrival of the lubricant that leaks from the rotation transmission mechanism 40 at the second seal 74. Accordingly, the lubricant reservoir 80 can delay the arrival of the lubricant that leaks from the rotation transmission mechanism 40 at the second seal 74 by reserving the lubricant. Consequently, it is possible to prevent the lubricant that leaks from the rotation transmission mechanism 40 from further leaking outward.

Also, in this embodiment, the lubricant reservoir 80 includes an annular partition wall 80d protruding to cover the part 74b on the first seal 71 side of the second seal 74. Accordingly, the annular partition wall 80d can prevent the arrival of the lubricant that is reserved in the lubricant reservoir 80 at the second seal 74. Consequently, it is possible to easily configure the lubricant reservoir 80 reserving the lubricant to delay the arrival of the lubricant that leaks from the rotation transmission mechanism 40 at the second seal 74.

In this embodiment, the surface 80c of the lubricant reservoir 80 that serves as a bottom surface of the lubricant reservoir 80 if the rotation axis CL direction of the rotator 42 is a horizontal direction is inclined to be closer to the rotation axis CL side as being closer from the first seal 71 side toward the second seal 74 side in the rotation axis CL direction of the rotator 42. Accordingly, if the rotation axis CL direction of the rotator 42 is a horizontal direction, the arrival of the lubricant that is reserved in the lubricant reservoir 80 at the second seal 74 can be prevented by the inclination of the surface 80c, which serves as the bottom surface of the annular lubricant reservoir 80. Consequently, it is possible to easily configure the lubricant reservoir 80 reserving the lubricant to delay the arrival of the lubricant that leaks from the rotation transmission mechanism 40 at the second seal 74.

In this embodiment, the robot 100 includes the lubricant discharge hole 61a, which is connected to the lubricant reservoir 80, and is normally closed and opened when the lubricant reserved in the lubricant reservoir 80 is discharged from the lubricant reservoir 80. Accordingly, the lubricant that is reserved in the lubricant reservoir 80 can be discharged from the lubricant reservoir 80 by opening the lubricant discharge hole 61a.

In addition, in this embodiment, the robot 100 includes an annular housing 61 arranged outside of the rotation transmission mechanism 40 to configure the lubricant reservoir 80 and having the lubricant discharge hole 61a formed in the housing. Accordingly, since the housing 61 serves to configure the lubricant reservoir 80 and also serves as a part in which the lubricant discharge holes 61a is formed, the number of parts in the robot 100 can be reduced as compared with a case in which the robot 100 separately includes a part that configures the lubricant reservoir 80 and a part in which the lubricant discharge holes 61a is formed.

In this embodiment, the lubricant discharge holes 61a are arranged at positions that will be positioned on the bottom end of the annular lubricant reservoir 80 if the rotation axis CL direction of the rotator 42 is a horizontal direction. Accordingly, if the rotation axis CL direction of the rotator 42 is a horizontal direction, the lubricant that is reserved in the lubricant reservoir 80 can be discharged from the lubricant reservoir 80 by opening the lubricant discharge hole 61a.

In this embodiment, the surface 80c of the lubricant reservoir 80 that serves as a bottom surface of the lubricant reservoir 80 if the rotation axis CL direction of the rotator 42 is a horizontal direction is inclined to be closer to the rotation axis CL side as being closer from the first seal 71 side toward the second seal 74 side. In addition, the lubricant discharge hole 61a is formed at a position closer to the first seal 71 with respect to the second seal 74 on the surface 80c of the lubricant reservoir 80, which serves as the bottom surface of the lubricant reservoir 80 if the rotation axis CL direction of the rotator 42 is the horizontal direction. Accordingly, if the rotation axis CL direction of the rotator 42 is a horizontal direction, the lubricant discharge hole 61a can be positioned in a part on a lower side of the surface 80c, which serves as the bottom surface of the annular lubricant reservoir 80, in the vertical direction. Consequently, if the rotation axis CL direction of the rotator 42 is a horizontal direction, the lubricant that is reserved in the lubricant reservoir 80 can be discharged from the lubricant reservoir 80 by opening the lubricant discharge hole 61a even in a case in which an amount of the lubricant that is reserved in the lubricant reservoir 80 is relatively small.

Also, in this embodiment, the robot 100 includes the rotation part 62 fixed to the rotator 42 and having the outer peripheral surface 62a that is in contact with an inner peripheral surface 74a of the second seal 74. In addition, a width W2 of the second seal 74 is smaller than a width W1 of the first seal 71 in the rotation axis CL direction of the rotator 42. Accordingly, since a contact area between the inner peripheral surface 74a of the second seal 74 and the outer peripheral surface 62a of the rotation part 62 is relatively small, it is possible to reduce a frictional resistance generated between the outer peripheral surface 62a of the rotation part 62 and the inner peripheral surface 74a of the second seal 74 when the rotation part 62 rotates relative to the second seal 74. Consequently, it is possible to reduce a loss of energy for rotating the rotator 42 relative to the fixer 43 in the rotation transmission mechanism 40.

Also, in this embodiment, the robot 100 includes the annular rotation part 62 fixed to the rotator 42 and having the outer peripheral surface 62a that is in contact with an inner peripheral surface 74a of the second seal 74. In addition, an inner diameter r2 of the second seal 74 is smaller than an inner diameter r1 of the first seal 71. Accordingly, since a moment that acts on a part of the outer peripheral surface 62a of the rotation part 62, which is in contact with the inner peripheral surface 74a of the second seal 74, is relatively small, it is possible to reduce a frictional resistance generated between the outer peripheral surface 62a of the rotation part 62 and the inner peripheral surface 74a of the second seal 74 when the rotation part 62 rotates relative to the second seal 74. Consequently, it is possible to reduce a loss of energy for rotating the rotator 42 relative to the fixer 43 in the rotation transmission mechanism 40.

Also, in this embodiment, the second seal 74 seals against leakage of the lubricant to an outside of the joint part 12. Accordingly, the lubricant reservoir 80 can delay the arrival of the lubricant that leaks from the rotation transmission mechanism 40 at the second seal 74, which seals against leakage of the lubricant to the outside of the joint part 12, by reserving the lubricant. Consequently, it is possible to prevent the lubricant that leaks from the rotation transmission mechanism 40 from leaking to the outside of the joint part 12.

Also, in this embodiment, the rotation transmission mechanism 40 is a speed reducer. Accordingly, the lubricant reservoir 80 can delay the arrival of the lubricant that leaks from the speed reducer as the rotation transmission mechanism 40 at the second seal 74 by reserving the lubricant. Consequently, it is possible to prevent the lubricant that leaks from the speed reducer as the rotation transmission mechanism 40 from further leaking outward.

### [Modified Embodiments]

Note that the embodiment disclosed this time must be considered as illustrative in all points and not restrictive. The scope of the present invention is not shown by the above description of the embodiments but by the scope of claims for patent, and all modifications (modified examples) within the meaning and scope equivalent to the scope of claims for patent are further included.

For example, while the example in which the lubricant reservoir 80 includes an annular partition wall 80d protruding to cover a part 74b of the second seal 74 on the first seal 71 side has been shown in the aforementioned embodiment, the present invention is not limited to this. In the present disclosure, the lubricant reservoir may include no annular partition wall protruding to cover the part of the second seal on the first seal side.

Also, while the example in which the surface 80c of the lubricant reservoir 80 that serves as a bottom surface of the lubricant reservoir 80 if the rotation axis CL direction of the rotator 42 is a horizontal direction is inclined to be closer to the rotation axis CL side as being closer from the first seal 71 side toward the second seal 74 side has been shown in the aforementioned embodiment, the present disclosure is not limited to this. In the present disclosure, the surface of the lubricant reservoir that serves as a bottom surface of the lubricant reservoir if the direction of the rotation axis of the rotator is a horizontal direction may not be inclined as being closer from the first seal side toward the second seal, or may be inclined toward a side opposite to the rotation axis side. Also, the surface of the lubricant reservoir that serves as the bottom surface of the lubricant reservoir if the direction of the rotation axis of the rotator is a horizontal direction may be formed in a stepped shape.

Also, while the example in which the robot 100 includes the lubricant discharge hole 61a, which is connected to the lubricant reservoir 80, and is normally closed and opened when the lubricant reserved in the lubricant reservoir 80 is discharged from the lubricant reservoir 80 has been shown in the aforementioned embodiment, the present disclosure is not limited to this. In this embodiment, the robot includes a lubricant discharge hole that is connected to the lubricant reservoir, and is normally opened to discharge the lubricant that is reserved in the lubricant reservoir from the lubricant reservoir. Also, the robot may include no lubricant discharge hole that is connected to the lubricant reservoir and discharges the lubricant reserved in the lubricant reservoir from the lubricant reservoir.

Also, while the example in which the robot 100 includes an annular housing 61 arranged outside of the rotation transmission mechanism 40 to configure the lubricant reservoir 80 and having the lubricant discharge hole 61a formed in the housing has been shown in the aforementioned embodiment, the present disclosure is not limited to this. In the present disclosure, the robot may separately include a part that configures the lubricant reservoir and a part in which the lubricant discharge hole is formed.

Also, while the example in which the lubricant discharge holes 61a are arranged at positions that will be positioned on the bottom end of the annular lubricant reservoir 80 if the rotation axis CL direction of the rotator 42 is a horizontal direction has been shown in the aforementioned embodiment, the present disclosure is not limited to this. In the present disclosure, the lubricant discharge holes may not be arranged at positions that will be positioned on the bottom end of the annular lubricant reservoir if the direction of the rotation axis of the rotator is a horizontal direction.

Also, while the example in which the surface 80c of the lubricant reservoir 80 that serves as a bottom surface of the lubricant reservoir 80 if the rotation axis CL direction of the rotator 42 is a horizontal direction is inclined to be closer to the rotation axis CL side as being closer from the first seal 71 side toward the second seal 74 side, and the lubricant discharge holes 61a are formed at positions closer to the first seal 71 with respect to the second seal 74 on the surface 80c of the lubricant reservoir 80, which serves as the bottom surface of the lubricant reservoir 80 if the rotation axis CL direction of the rotator 42 is the horizontal direction has been shown in the aforementioned embodiment, the present disclosure is not limited to this. In the present disclosure, the surface of the lubricant reservoir that serves as a bottom surface of the lubricant reservoir if the direction of the rotation axis of the rotator is a horizontal direction may be inclined to be closer to the rotation axis side as being closer from the first seal side toward the second seal side, and the lubricant discharge holes may be formed at a center between the first seal and the second seal or at positions closer to the second seal with respect to the first seal on the surface of the lubricant reservoir, which serves as the bottom surface of the lubricant reservoir if the direction of the rotation axis of the rotator is the horizontal direction.

Also, while the example in which a width W2 of the second seal 74 is smaller than a width W1 of the first seal 71 in the rotation axis CL direction of the rotator 42 has been shown in the aforementioned embodiment, the present disclosure is not limited to this. In the present disclosure, the width of the second seal may be equal to the width of the first seal or greater than the width of the first seal in the direction of the rotation axis of the rotator.

Also, while the example in which an inner diameter r2 of the second seal 74 is smaller than an inner diameter r1 of the first seal 71 has been shown in the aforementioned embodiment, the present disclosure is not limited to this. In this disclosure, the inner diameter of the second seal may be equal to the inner diameter of the first seal or greater than the inner diameter of the first seal.

Also, while the example in which the second seal 74 seals against leakage of the lubricant to an outside of the joint part 12 has been shown in the aforementioned embodiment, the present disclosure is not limited to this. In the present disclosure, the second seal may seal against leakage of the lubricant from an inner part to an outer part inside the joint.

Also, while the example in which the rotation transmission mechanism 40 is a speed reducer has been shown in the aforementioned embodiment, the present disclosure is not limited to this. In the present disclosure, the rotation transmission mechanism may be a speed increaser or a transmission.

Also, while the example in which a position of the outer peripheral surface of the second seal 74 is on the outer side with respect to a position of the inner peripheral surface of the first seal 71 in the radial direction of the rotator 42 has been shown in the aforementioned embodiment, the present disclosure is not limited to this. In the present disclosure, the position of the outer peripheral surface of the second seal may be on the inner side with respect to the position of the inner peripheral surface of the first seal in the radial direction of the rotator.

Also, while the example in which a plurality of lubricant discharge holes 61a are arranged at constant intervals away from each other in the radial direction of the rotator 42 has been shown in the aforementioned embodiment, the present disclosure is not limited to this. In the present disclosure, the plurality of lubricant discharge holes may be arranged at inconstant intervals away from each other in the radial direction of the rotator, or not a plurality of lubricant discharge holes may be arranged.

Functions of elements disclosed in this specification can be realized by a circuit or processing circuit including a general-purpose processor, a dedicated processor, an integrated circuit, ASIC (Application Specific Integrated Circuits), a conventional circuit and/or combination of them configured or programmed to realize the functions disclosed. A processor is considered a processing circuit or circuits because it contains transistors and other circuitry. In the present disclosure, a circuit, unit, or means is hardware that performs an enumerated function or is hardware programmed to perform an enumerated function. The hardware may be the hardware disclosed herein or any other known hardware that is programmed or configured to perform the enumerated functions. If the hardware is a processor, which is considered a type of circuit, the circuit, means, or unit is a combination of hardware and software, and software is used to configure the hardware and/or processor.

### [Modes]

It is understood by those skilled in the art that the exemplary embodiments described above are specific examples of the following aspects.

### [Mode 1]

A robot includes a robot arm including a plurality of arm parts and a joint part connecting the arm parts to each other; a rotation transmission mechanism arranged in the joint and including a fixer, a rotator rotating about a rotation axis relative to the fixer, and an annular first seal arranged between the fixer and the rotator to seal a lubricant inside the rotation transmission mechanism; an annular second seal arranged outside of the rotation transmission mechanism and on one side of the first seal in the rotation axis direction of the rotator; and an annular lubricant reservoir arranged between the first seal and the second seal in the rotation axis direction of the rotator to reserve the lubricant so as to delay arrival of the lubricant that leaks from the rotation transmission mechanism at the second seal.

### [Mode 2]

In the robot according to mode 1**,** the lubricant reservoir includes an annular partition wall protruding to cover a part of the second seal on the first seal side.

### [Mode 3]

In the robot according to mode 1 or 2, a surface of the lubricant reservoir that serves as a bottom surface of the lubricant reservoir if the rotation axis direction of the rotator is a horizontal direction is inclined to be closer to the rotation axis side as being closer from the first seal side toward the second seal side.

### [Mode 4]

In the robot according to any of modes 1 to 3, a lubricant discharge hole being connected to the lubricant reservoir, and being normally closed and opened when the lubricant reserved in the lubricant reservoir is discharged from the lubricant reservoir is provided.

### [Mode 5]

In the robot according to mode 4, an annular housing arranged outside of the rotation transmission mechanism to configure the lubricant reservoir and having the lubricant discharge hole formed in the housing is provided.

### [Mode 6]

In the robot according to mode 4 or 5, the lubricant discharge hole is arranged on a lower end of the annular lubricant reservoir if the rotation axis direction of the rotator is a horizontal direction.

### [Mode 7]

In the robot according to mode 6, a surface of the lubricant reservoir that serves as a bottom surface of the lubricant reservoir if the rotation axis direction of the rotator is a horizontal direction is inclined to be closer to the rotation axis side as being closer from the first seal side toward the second seal side; and the lubricant discharge hole is formed at a position closer to the first seal with respect to the second seal on the surface of the lubricant reservoir, which serves as the bottom surface of the lubricant reservoir if the rotation axis direction of the rotator is the horizontal direction.

### [Mode 8]

In the robot according to any of modes 1 to 7, a rotation part fixed to the rotator and having an outer peripheral surface that is in contact with an inner peripheral surface of the second seal is provided; and a width of the second seal is smaller than a width of the first seal in the rotation axis direction of the rotator.

### [Mode 9]

In the robot according to any of modes 1 to 8, an/the annular rotation part fixed to the rotator and having an/the outer peripheral surface that is in contact with an/the inner peripheral surface of the second seal, an inner diameter of the second seal is smaller than an inner diameter of the first seal is provided.

### [Mode 10]

In the robot according to any of modes 1 to 9, the second seal seals against leakage of the lubricant to an outside of the joint part.

### [Mode 11]

In the robot according to any of modes 1 to 10, the rotation transmission mechanism is a speed reducer.

## Claims

1. A robot (100) comprising:
a robot arm (10) including a plurality of arm parts (11) and a joint part (12) connecting the arm parts (11) to each other;
a rotation transmission mechanism (40) arranged in the joint (12) and including a fixer (43), a rotator (42) rotating about a rotation axis (CL) relative to the fixer (43), and an annular first seal (71) arranged between the fixer (43) and the rotator (42) to seal a lubricant inside the rotation transmission mechanism;
an annular second seal (74) arranged outside of the rotation transmission mechanism (40) and on one side of the first seal (71) in the rotation axis (CL) direction of the rotator (42); and
an annular lubricant reservoir (80) arranged between the first seal (71) and the second seal (74) in the rotation axis (CL) direction of the rotator (42) to reserve the lubricant so as to delay arrival of the lubricant that leaks from the rotation transmission mechanism (40) at the second seal (74).

2. The robot (100) according to claim 1, wherein the lubricant reservoir (80) includes an annular partition wall (80d) protruding to cover a part (74b) of the second seal (74) on the first seal (71) side.

3. The robot (100) according to claim 1 or 2, wherein a surface (80c) of the lubricant reservoir (80) that serves as a bottom surface of the lubricant reservoir (80) if the rotation axis (CL) direction of the rotator (42) is a horizontal direction is inclined to be closer to the rotation axis (CL) side as being closer from the first seal (71) side toward the second seal (74) side.

4. The robot (100) according to any of claims 1 to 3 comprising a lubricant discharge hole (61a) being connected to the lubricant reservoir (80), and being normally closed and opened when the lubricant reserved in the lubricant reservoir (80) is discharged from the lubricant reservoir (80).

5. The robot (100) according to claim 4 comprising an annular housing (61) arranged outside of the rotation transmission mechanism (40) to configure the lubricant reservoir (80) and having the lubricant discharge hole (61a) formed in the housing.

6. The robot (100) according to claim 4 or 5, wherein the lubricant discharge hole (61a) is arranged on a lower end (80a) of the annular lubricant reservoir (80) if the rotation axis (CL) direction of the rotator (42) is a horizontal direction.

7. The robot (100) according to claim 6, wherein
a surface (80c) of the lubricant reservoir (80) that serves as a bottom surface of the lubricant reservoir (80) if the rotation axis (CL) direction of the rotator (42) is a horizontal direction is inclined to be closer to the rotation axis (CL) side as being closer from the first seal (71) side toward the second seal (74) side; and
the lubricant discharge hole (61a) is formed at a position closer to the first seal (71) with respect to the second seal (74) on the surface (80c) of the lubricant reservoir (80), which serves as the bottom surface of the lubricant reservoir (80) if the rotation axis (CL) direction of the rotator (42) is the horizontal direction.

8. The robot (100) according to any of claims 1 to 7 comprising a rotation part (62) fixed to the rotator (42) and having an outer peripheral surface (62a) that is in contact with an inner peripheral surface (74a) of the second seal (74), wherein
a width (W2) of the second seal (74) is smaller than a width (W1) of the first seal (71) in the rotation axis (CL) direction of the rotator (42).

9. The robot (100) according to any of claims 1 to 8 comprising an/the annular rotation part (62) fixed to the rotator (42) and having an/the outer peripheral surface (62a) that is in contact with an/the inner peripheral surface (74a) of the second seal (74), wherein
an inner diameter (r2) of the second seal (74) is smaller than an inner diameter (r1) of the first seal (71).

10. The robot (100) according to any of claims 1 to 9, wherein the second seal (74) seals against leakage of the lubricant to an outside of the joint part (12).

11. The robot (100) according to any of claims 1 to 10, wherein the rotation transmission mechanism (40) is a speed reducer.
